# EUROPÄISCHE PATENTANMELDUNG

(11) **EP 0 592 806 A1**
(43) Veröffentlichungstag der Anmeldung: **20.04.1994**
(21) Anmeldenummer: 93114366.3
(22) Anmeldetag: 08.09.1993
(51) Int. Cl.: H02B 1/50, E05B 65/08

(54) **Gehäuse für Kabelverzweigerschränke**

(30) Priorität: 10.10.1992 DE 9213708 U
(71) Anmelder: STEWING KUNSTSTOFFBETRIEB GmbH, D-46282 Dorsten (DE)
(72) Erfinder: Stewing, Albert, D-46282 Dorsten (DE)
(74) Vertreter: Honke, Manfred, Dr.-Ing.

(57) **Zusammenfassung**

Es handelt sich um ein Kabelverzweigergehäuse (1) mit einer in der Gehäusevorderfront hochschiebbaren und in verschiedenen Höhenstellungen feststellbaren Frontplatte (3), wobei der Gehäusekörper beidseitig Führungsprofile (5) für die Frontplatte (3) aufweist und die Frontplatte (3) innenseitig einen im unteren Randbereich der Frontplatte zugänglichen Feststellmechanismus aufweist. Auf der Innenseite der Frontplatte (3) ist ein quer zur Hochschieberichtung verfahrbarer und bis in den Bereich des zugeordneten Führungsprofils (5) am Gehäusekörper (4) vorfahrbarer Riegel (21) gelagert. Das zugeordnete Führungsprofil (5) weist in vorgegebenen Höhenabständen Einfallsausnehmungen (22) für den Riegel (21) auf. Der Riegel (21) ist von einer in Einfallrichtung wirkenden Schließfeder (23) beaufschlagt. Der Riegel (21) ist mittels einer Betätigungsstange (24) in Entriegelungsstellung zurückführbar.

## Beschreibung

Die Erfindung betrifft ein Kabelverzweigergehäuse für Kabelverzweigerschränke, mit einer in der Gehäusevorderfront hochschiebbaren und in verschiedenen Höhenstellungen feststellbaren Frontplatte, wobei der Gehäusekörper beidseitig Führungsprofile für die Frontplatte aufweist und die Frontplatte innenseitig einen im unteren Randbereich der Frontplatte zugänglichen Feststellmechanismus aufweist.

Es ist ein derartiges Kabelverzweigergehäuse mit einem Feststellmechanismus entwickelt worden, der an sich eine einwandfreie Arretierung der Frontplatte in verschiedenen Höhenstellungen gewährleistet. Im einzelnen ist auf der Innenseite der Frontplatte eine Feststelleiste mit in vorgegebenen Höhenabständen Rastausnehmungen für einen frontseitig am Gehäusedach vorkragenden Rastnocken ausrückbar aufgehängt, die also bei hochgeschobener Frontplatte derart ausgerückt wird, daß der Rastnocken in die jeweils zugeordnete Rastausnehmung der Feststelleiste eingreift. Die Festelleiste ist mittels eines Hebelmechanismus aus- und einrückbar. Der Hebelmechanismus ist im unteren Randbereich der Frontplatte zugänglich, so daß die Betätigung der Feststelleiste durch eine Bedienungsperson bei hochgeschobener Frontplatte keine Schwierigkeiten bereitet. Der Hebelmechanismus weist einen in eine Betätigungsmulde auf der Innenseite im unteren Randbereich der Frontplatte vorkragenden Betätigungshebel mit einer Handhabe und einen auf der Innenseite der Frontplatte schwenkbar gelagerten Stellhebel auf, der an seinem freien Ende mit einem Gelenkkopf an der Festelleiste angreift. Dadurch wird erreicht, daß durch die bloße Auf- und Abbewegung des Betätigungshebels die Feststelleiste ausgerückt bzw. eingerückt wird. Insoweit wird mit dem Feststellmechanismus gleichsam eine Einfachsicherung der in verschiedenen Höhenstellungen feststellbaren Frontplatte verwirklicht, die einhändig gelöst werden kann.

Der Erfindung liegt die Aufgabe zugrunde, ein Kabelverzweigergehäuse für Kabelverzweigerschränke der eingangs beschriebenen Ausführungsform zu schaffen, die sich durch eine Doppelsicherung für die hochschiebbare Frontplatte auszeichnet, so daß die in irgendeiner Höhenstellung festgestellte Frontplatte nur durch beidhändiges Lösen der Doppelsicherung gleichsam entriegelt und in ihre Ausgangsstellung niedergefahren werden kann.

Diese Aufgabe löst die Erfindung bei einem gattungsgemäßen Kabelverzweigergehäuse dadurch, daß - zusätzlich zu dem Feststellmechanismus - auf der Innenseite der Frontplatte ein quer zur Hochschieberichtung verfahrbarer und bis in den Bereich des zugeordneten Führungsprofils am Gehäusekörper vorfahrbarer Riegel gelagert ist, daß das zugeordnete Führungsprofil am Gehäusekörper in vorgegebenen Höhenabständen Einfallausnehmungen für den Riegel aufweist, daß der Riegel von einer in Einfallrichtung wirkenden Schließfeder beaufschlagt ist, und daß der Riegel mittels einer im unteren Randbereich der Frontplatte zugänglichen Betätigungsstange in Entriegelungsstellung zurückführbar ist. - Diese Maßnahmen der Erfindung haben zur Folge, daß neben dem bereits vorhandenen Feststellmechanismus ein Verriegelungsmechanismus verwirklicht wird, der dafür sorgt, daß die hochgeschobene Frontplatte bei einem zufälligen Lösen des Feststellmechanismus nicht in ihre Ausgangsstellung niederfahren kann, vielmehr muß dazu auch der Verriegelungsmechanismus gelöst werden. Folglich wird für die hochgeschobene Frontplatte eine Doppelsicherung verwirklicht, die ein beidhändiges Lösen verlangt, wenn die Frontplatte in ihre Ausgangsstellung und folglich Schließstellung niederfahren soll. Auf diese Weise werden Unfallgefahren, die aus einer zufällig bzw. unbeabsichtigt niederfahrenden Frontplatte resultieren können, vollständig beseitigt. Denn auch beim Lösen lediglich des Verriegelungsmechanismus bleibt die hochgeschobene Frontplatte aufgrund des dennoch wirksamen Feststellmechanismus in ihrer Höhenstellung arretiert. Stets müssen Feststellmechanismus und Verriegelungsmechanismus beidhändig im lösenden Sinne betätigt werden.

Weitere erfindungswesentliche Merkmale sind im folgenden aufgeführt. So sieht die Erfindung vor, daß der Riegel eine in Hochschieberichtung abgeschrägte Stirnfläche und die Einfallausnehmungen jeweils eine Auflagerfläche für den eingefallenen Riegel und in Hochschieberichtung eine abgeschrägte Gleitfläche aufweisen und dadurch der Riegel bei hochfahrender Frontplatte aus der jeweiligen Einfallausnehmung zurückgedrückt wird und bei niederfahrender Frontplatte in die jeweilige Einfallausnehmung einfällt und auf der Auflagefläche aufliegt, so daß die Frontplatte in dieser Höhenstellung automatisch arretiert wird. Eine dieser Einfallausnehmungen befindet sich selbstverständlich vor der Ausgangs- bzw. Endstellung der Frontplatte. - Der Riegel kann in U-förmigen Führungsböcken und zumindest einem umgekehrt U-förmigen Führungsportal an der Frontplatte geführt sein. Die Führungsböcke und zumindest die Seitenwangen für das Führungsportal sind an der Frontplatte innenseitig angeformt. Weiter empfiehlt die Erfindung, daß der Riegel auf seiner Unterseite ein in Riegellängsrichtung verlaufendes und gegen die Frontplatte offenes Federgehäuse für die Schließfeder aufweist, daß das Federgehäuse eine offene Stirnseite aufweist, daß die Schließfeder an dieser offenen Stirnseite gegen einen an der Frontplatte befestigten bzw. angeformten Lagerbock abgestützt ist, und daß der Lagerbock bei Riegelbewegung von dem Federgehäuse überfahrbar ist, beispielsweise bei aus Verriegelungsstellung in Entriegelungsstellung zurückgedrückten Riegel. Nach einem Vorschlag der Erfindung, dem selbständige Bedeutung zukommt, ist vorgesehen, daß der Riegel an seinem hinteren Ende eine Keilfläche aufweist, die mit einer korrespondierenden Keilfläche am oberen Stangenende der den Riegel kreuzenden Betätigungsstange derart zusammenwirkt, daß der Riegel durch Hochdrücken der Betätigungsstange aus Verriegelungsstellung in Entriegelungsstellung zurückdrückbar ist. Die Führung für einerseits den Riegel und andererseits die Betätigungsstange ist so gewählt, daß stets ein einwandfreier Eingriff zwischen den Keilflächen an einerseits dem Riegel und andererseits der Betätigungsstange gewährleistet ist. Die Betätigungsstange ist vorzugsweise zumindest im unteren Stangenbereich und im oberen Stangenbereich hochschiebbar innenseitig an der Frontplatte geführt, z. B. im unteren Stangenbereich neben einer Griffmulde der Frontplatte und im oberen Stangenbereich mittels einer Langlochführung. Auch der Betätigungshebel oder dergleichen Betätigungsglied für den Feststellmechanismus ist vorzugsweise neben der Griffmulde bzw. einer weiteren Griffmulde im unteren Radbereich der Frontplatte zugänglich, zumal die Frontplatte regelmäßig mit zwei Griffmulden ausgeführt ist.

Im folgenden wird die Erfindung anhand einer lediglich ein Ausführungsbeispiel darstellenden Zeichnung näher erläutert; es zeigen:

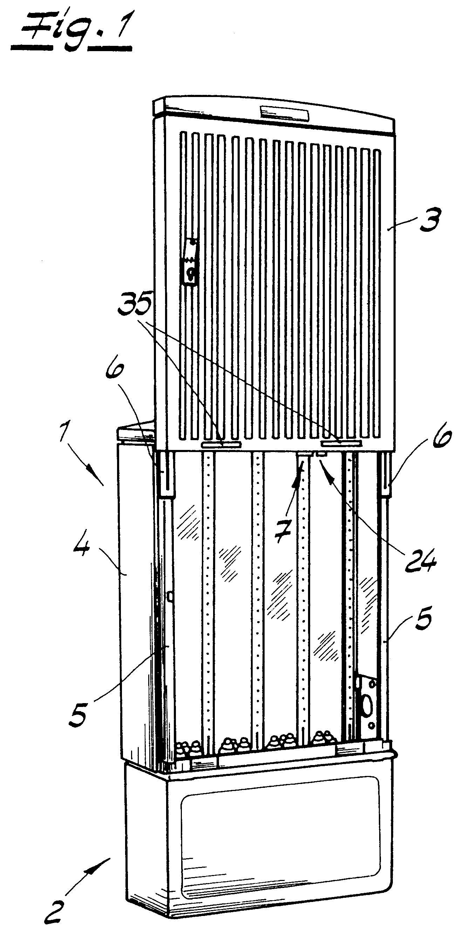

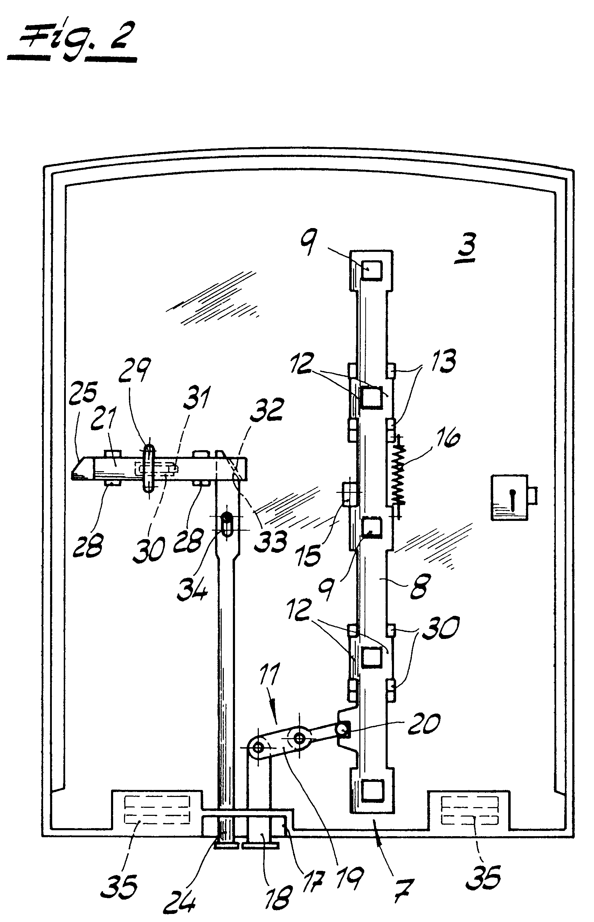

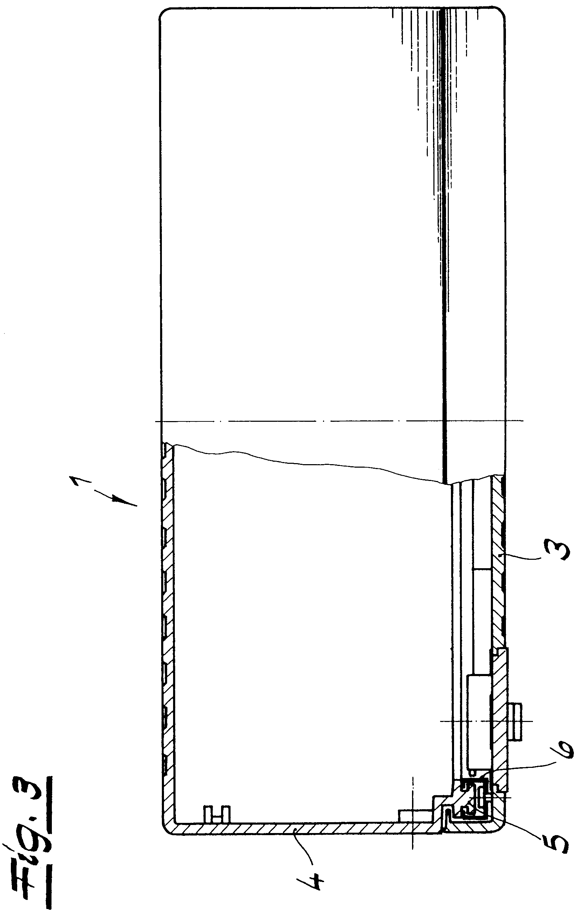

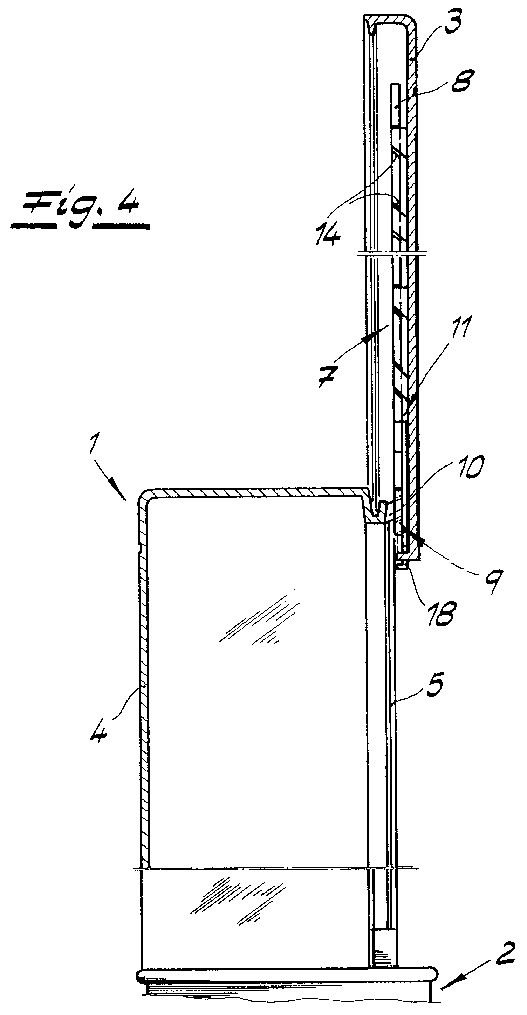

- Fig. 1: einen Kabelverzweigerschrank mit einem Kabelverzweigergehäuse und einem Sockel in perspektivischer Darstellung bei hochgefahrener Frontplatte,

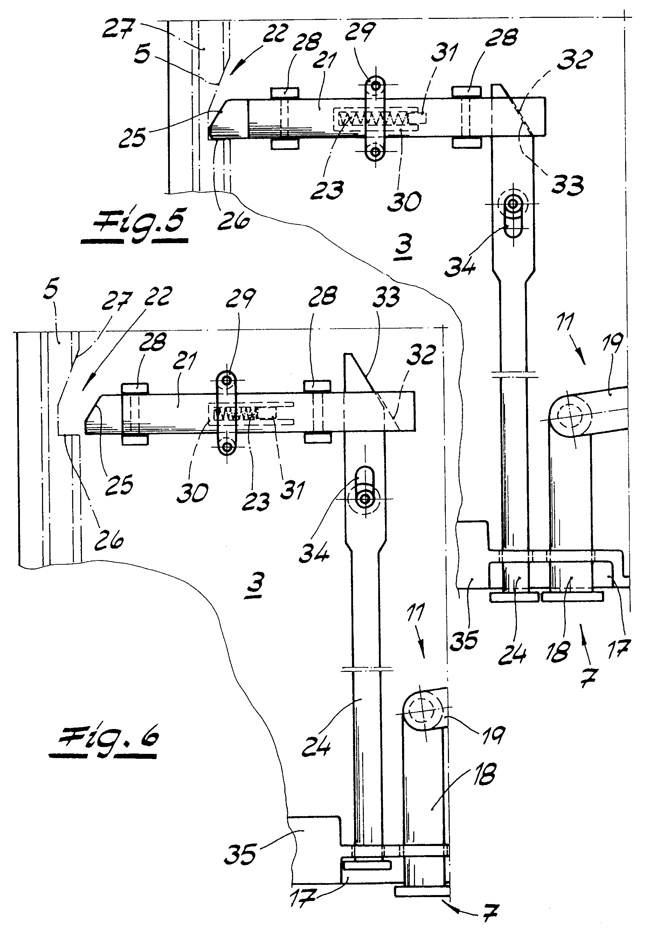

- Fig. 2: die Frontplatte für den Gegenstand nach Fig. 1 in Ansicht von hinten,

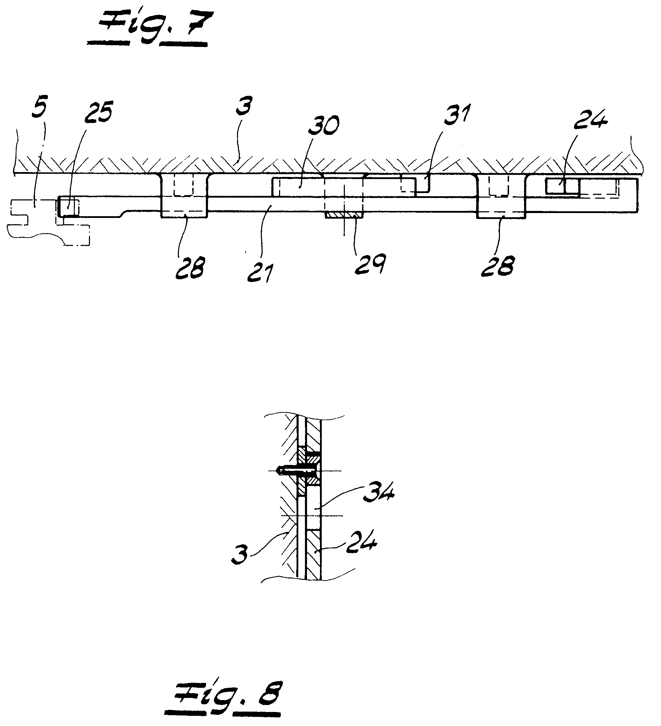

- Fig. 3: einen teilweisen Horizontalschnitt durch das Kabelverzweigergehäuse im Bereich eines Führungsprofils für die Frontplatte,
- Fig. 4: den Gegenstand nach Fig. 1 in Seitenansicht bei hochgefahrener Frontplatte mit Ansicht auf den Festellmechanismus,
- Fig. 5: die Frontplatte für den Gegenstand nach Fig. 1 in Ansicht von hinten mit dem Verriegelungsmechanismus in vergrößerter Darstellung und lediglich angedeutetem Betätigungshebel für den Feststellmechanismus,
- Fig. 6: den Gegenstand nach Fig. 5 bei betätigter Betätigungsstange und dadurch aus Entriegelungsstellung zurückgedrücktem Riegel,
- Fig. 7: einen Querschnitt durch den Gegenstand nach Fig. 5 im Bereich des Riegels und
- Fig. 8: einen Querschnitt durch die Langlochführung für die Betätigungsstange.

In den Figuren ist ein Kabelverzweigergehäuse 1 für Kabelverzweigerschränke dargestellt. Das Kabelverzweigergehäuse 1 befindet sich auf einem Sockel 2 und weist eine in der Gehäusevorderfront hochschiebbare und in verschiedenen Höhenstellungen feststellbare Frontplatte 3 auf. Der Gehäusekörper 4 weist beidseitig Führungsprofile 5 für die Frontplatte 3 auf. Die Frontplatte 3 ist beidseitig an Führungsschienen 6 angeschlossen, die auf den Führungsprofilen 5 höhenverfahrbar geführt sind. Ferner weist die Frontplatte 3 innenseitig einen im unteren Randbereich der Frontplatte zugänglichen Feststellmechanismus 7 auf. Der Feststellmechanismus 7 besitzt eine auf der Innenseite der Frontplatte 3 ausrückbare aufgehängte Feststelleiste 8 mit in vorgegebenen Höhenabständen Rastausnehmungen 9 für einen frontseitig im oberen Bereich am Gehäusekörper 4 vorkragenden Rastnocken 10. Die Feststelleiste 8 ist mittels eines Hebelmechanismus 11 aus- und einrückbar. Der Hebelmechanismus 11 ist im unteren Bereich der Frontplatte zugänglich. Die Feststelleiste 8 weist seitliche Lageransätze 12 auf und ist zwischen in vorgegebenen Höhenabständen paarweise angeordneten Lagerwangen 13 mit in Ausrückrichtung ansteigenden Gleitflächen 14, für die Lageransätze 12 aufgehängt. Zur Begrenzung des Ausrückhubes ist zumindest ein Anschlag 15 für die Feststelleiste bzw. ein Lageransatz vorgesehen, wobei die Lagerwangen 13 und der Anschlag 15 auf der Innenseite der Frontplatte 3 befestigt sind. Außerdem ist eine die Ausrückbewegung der Feststelleiste 8 unterstützenden Zugfeder 16 einerseits an der Lagerwange 13 und andererseits an der Feststelleiste 8 befestigt. Der Hebelmechanismus 11 besitzt einen in eine Betätigungsmulde 17 auf der Innenseite im unteren Randbereich der Frontplatte 3 vorkragenden Betätigungshebel 18 und einen auf der Innenseite der Frontplatte 3 schwenkbar gelagerten Stellhebel 19, der an seinem freien Hebelende mit einem Gelenkkopf 20 in eine Gelenkausnehmung an der Feststelleiste 8 eingreift.

Auf der Innenseite der Frontplatte 3 ist ferner ein quer zur Hochschieberichtung verfahrbarer und bis in den Bereich des zugeordneten Führungsprofils 5 am Gehäusekörper 4 vorfahrbarer Riegel 21 gelagert. Das zugeordnete Führungsprofil 5 weist in vorgegebenen Höhenabständen Einfallausnehmungen 22 für den Riegel 21 auf. Der Riegel 21 ist von einer in Einfallrichtung wirkenden Schließfeder 23 beaufschlagt und mittels einer im unteren Randbereich der Frontplatte 3 zugänglichen Betätigungsstange 24 in Entriegelungsstellung zurückführbar. Die Betätigungsstange 24 kreuzt den Riegel 21 praktisch, im 90° Winkel. Auch die Betätigungsstange 24 kragt mit ihrem unteren Stangenende in eine Betätigungsmulde 17 vor, bei der es sich um die gleiche Betätigungsmulde wie für den Betätigungshebel 18 des Feststellmechanismus 7 bzw. Hebelmechanismus 11 handeln kann. Der Riegel 21 besitzt eine in Hochschieberichtung abgeschrägte Stirnfläche 25 während die Einfallausnehmungen 22 jeweils eine Auflagefläche 26 für den eingefallenen Riegel 21 und in Hochschieberichtung eine abgeschrägte Gleitfläche 27 aufweisen. Die abgeschrägte Stirnfläche 25 und die abgeschrägten Gleitflächen 27 korrespondieren derart, daß der Riegel 21 bei hochfahrender Frontplatte 3 aus der jeweiligen Einfallausnehmung 22 zurückgedrückt wird, dagegen bei niederfahrender Frontplatte 3 in eine Einfallausnehmung 22 einfällt und auf der Auflagefläche 26 aufliegt, so daß die Frontplatte 3 arretiert wird und nicht weiter niederfahren kann. Der Riegel 21 ist in U-förmigen Führungsböcken 28 und zumindest einem umgekehrt U-förmigen Führungsportal 29 an der Frontplatte 3 geführt. Ferner weist der Riegel 21 auf seiner Unterseite ein in Riegellängsrichtung verlaufendes und gegen die Frontplatte 3 offenes Federgehäuse 30 für die Schließfeder 23 auf. Das Federgehäuse 30 weist eine offene Stirnseite auf. Die Schließfeder 23 ist an dieser offenen Stirnseite gegen einen an der Frontplatte 3 befestigten Lagerbock 31 abgestützt. Der Lagerbock 31 wird bei zurückbewegtem Riegel 21 von dem Federgehäuse 30 überfahren. Der Riegel 21 weist an seinem hinteren Ende eine Keilfläche 32 auf, die mit einer korrespondierenden Keilfläche 33 am oberen Stangenende der Betätigungsstange 24 derart zusammenwirkt, daß der Riegel 21 durch Hochdrücken der Betätigungsstange 24 aus Verriegelungsstellung in Entriegelungsstellung zurückdrückbar ist. Die Betätgigungsstange 24 ist zumindest im unteren Stangenbereich und im oberen Stangenbereich hochschiebbar an der Frontplatte 3 geführt, z. B. im unteren Stangenbereich im Bereich der Betätigungsmulde 17 und im oberen Stangenbereich mittels einer Langlochführung 34. Die Frontplatte 3 besitzt im übrigen Griffmulden 35.

## Patentansprüche

1. Kabelverzweigergehäuse für Kabelverzweigerschränke, mit einer in der Gehäusevorderfront hochschiebbaren und in verschiedenen Höhenstellungen festellbaren Frontplatte, wobei der Gehäusekörper beidseitig Führungsprofile für die Frontplatte aufweist und die Frontplatte innenseitig einen im unteren Randbereich der Frontplatte zugänglichen Feststellmechanismus aufweist, **dadurch gekennzeichnet**, daß auf der Innenseite der Frontplatte (3) ein quer zur Hochschieberichtung verfahrbarer und bis in den Bereich des zugeordneten Führungsprofils (5) am Gehäusekörper (4) vorfahrbarer Riegel (21) gelagert ist, daß das zugeordnete Führungsprofil (5) in vorgegebenen Höhenabständen Einfallausnehmungen (22) für den Riegel (21) aufweist, daß der Riegel (21) von einer in Einfallrichtung wirkenden Schließfeder (23) beaufschlagt ist, und daß der Riegel (21) mittels einer im unteren Randbereich der Frontplatte (3) zugänglichen Betätigungsstange (24) in Entriegelungsstellung zurückführbar ist.

2. Kabelverzweigergehäuse nach Anspruch 1, dadurch gekennzeichnet, daß der Riegel (21) eine in Hochschieberichtung abgeschrägte Stirnfläche (25) und die Einfallausnehmungen (22) jeweils eine Auflagefläche (26) für den eingefallenen Riegel (21) und in Hochschieberichtung eine abgeschrägte Gleitfläche (27) aufweisen und dadurch der Riegel (21) bei hochfahrender Frontplatte (3) aus der jeweiligen Einfallausnehmung (22) zurückgedrückt wird und bei niederfahrender Frontplatte (3) in eine Einfallausnehmung (22) einfällt und auf der Auflagefläche (26) aufliegt.

3. Kabelverzweigergehäuse nach Anspruch 1 oder 2, dadurch gekennzeichnet, daß der Riegel (21) in U-förmigen Führungsböcken (28) und zumindest einem umgekehrt U-förmigen Führungsportal (29) an der Frontplatte (3) geführt ist.

4. Kabelverzweigergehäuse nach einem der Ansprüche 1 bis 3, dadurch gekennzeichnet, daß der Riegel (21) auf seiner Unterseite ein in Riegellängsrichtung verlaufendes und gegen die Frontplatte (3) offenes Federgehäuse (30) für die Schließfeder aufweist, daß das Federgehäuse (30) eine offene Stirnseite aufweist, daß die Schließfeder (23) an dieser offenen Stirnseite gegen einen an der Frontplatte (3) befestigten Lagerbock (31) abgestützt ist und daß der Lagerbock (31) bei Riegelbewegung von dem Federgehäuse (30) überfahrbar ist.

5. Kabelverzweigergehäuse nach einem der Ansprüche 1 bis 4, dadurch gekennzeichnet, daß der Riegel (21) an seinem hinteren Ende eine Keilfläche (32) aufweist, die mittels einer korrespondierenden Keilfläche (33) am oberen Stangenende der den Riegel (21) kreuzenden Betätigungsstange (24) derart zusammewirkt, daß der Riegel (21) durch Hochdrücken der Betätigungsstange (24) aus Verriegelungsstellung in Entriegelungsstellung zurückdrückbar ist.

6. Kabelverzweigergehäuse nach einem der Ansprüche 1 bis 5, dadurch gekennzeichnet, daß die Betätigungsstange (24) zumindest im unteren Stangenbereich und im oberen Stangenbereich hochschiebbar an der Frontplatte (3) geführt ist, z. B. im unteren Stangenbereich im Bereich einer Betätigungsmulde (17) und im oberen Stangenbereich mittels einer Langlochführung (34).
